# EUROPEAN PATENT APPLICATION

(11) **EP 3 176 044 A1**
(43) Date of publication of application: **07.06.2017**
(21) Application number: 16170047.1
(22) Date of filing: 18.05.2016
(51) Int. Cl.: B60T 17/22, B60Q 1/44

(54) **APPARATUS FOR DETERMINING VEHICLE BRAKING AND METHOD USING THE SAME**

(30) Priority: 04.12.2015 KR 20150172494
(71) Applicant: Hyundai Motor Company, Seoul 137-938 (KR); Kia Motors Corporation, Seoul (KR)
(72) Inventor: YOO, Byoung Soo, Incheon (KR)
(74) Representative: Viering, Jentschura & Partner mbB Patent- und Rechtsanwälte

(57) **Abstract**

An apparatus and method are provided for determining a vehicle braking. The apparatus includes a braking light switch (BLS) that generates alternatively a switch on signal or a switch off signal, corresponding to a brake operation of a vehicle. A sensor (10) senses a pressure that corresponds to the brake operation and generates a pressure value that corresponds to the sensed pressure. A controller (30) determines an operation of a brake based on the switch on signal, the switch off signal, and the pressure value, that are transmitted and also determines the brake to be operated when the switch on signal is received, or the pressure value is greater than a predetermined threshold pressure.

## Description

### CROSS-REFERENCE TO RELATED APPLICATION

This application claims priority to and the benefit of Korean Patent Application No. 10-2015-0172494 filed in the Korean Intellectual Property Office on December 04, 2015, the entire contents of which are incorporated herein by reference.

### BACKGROUND

### (a) Field of the Invention

The present invention relates to a method for determining a vehicle braking, and more particularly to a method that more accurately determines whether braking of the vehicle is generated.

### (b) Description of the Related Art

In general, a vehicle is decelerated by a braking apparatus. Particularly, in the conventional method for determining the vehicle braking, when a driver engages a brake pedal (e.g., exerts pressure onto the pedal), the braking is determined by an on or off signal of a brake light switch (BLS) mounted on the pedal. However, in the conventional BLS as a contact type, the BLS may be mistaken as the braking by errors such as a fixation by a short or an incorrect energizing in the on state, and as a result, although the driver has engaged the brake pedal, several controllers that determine the controls of the vehicle using the BIS signal may mistake the errors as the on signal to be stopped thus preventing the vehicle operation.

Additionally, in the conventional method, whether the braking is generated is determined based only on the BIS signal, as a result, a controller showing other error codes such as an electronic stability control (ESC) and an electrically erasable programmable read-only memory (EEPROM) is mistaken as incorrect or faulty thus causing an exchange problem.

The above information disclosed in this section is merely for enhancement of understanding of the background of the invention and therefore it may contain information that does not form the prior art that is already known in this country to a person of ordinary skill in the art.

### SUMMARY

The present invention provides an apparatus and method of more accurately determining whether the braking of the vehicle is generated. Particularly, the apparatus for determining a vehicle braking according to an exemplary embodiment may include a braking light switch configured to generate a switch on signal or a switch off signal, corresponding to a brake operation of a vehicle; a sensor configured to sense a pressure that corresponds to the brake operation and to generate a pressure value that corresponds to the sensed pressure; and a controller configured to determine an operation of a brake based on the switch on signal, the switch off signal, and the pressure value, that are transmitted, wherein the controller may be configured to determine the brake to be operated when the switch on signal is received, or the pressure value is greater than a predetermined threshold pressure.

Further, the controller may be configured to determine the brake not to be operated (e.g., pressure is not exerted onto the pedal) when the switch off signal is received and the pressure value is less than the threshold pressure. The sensor may be configured to generate a stroke value that corresponds to the brake operation, and the controller may be configured to determine the brake to be operated when the switch on signal is received, or the pressure value is greater than a predetermined threshold pressure, or the stroke value is greater than 0.

The controller may include a storage unit (e.g., a memory) configured to store a diagnostic trouble code that corresponds to the braking light switch malfunction. Additionally, the vehicle braking deciding apparatus according to an exemplary embodiment may further include a communication unit, the braking light switch, the sensor, and the controller may be connected with each other via the communication unit, and the switch on signal, the switch off signal, and the pressure value may be transmitted to the controller via the communication unit.

A method for determining a vehicle braking according to an exemplary embodiment may include generating a switch on signal, or a switch off signal, that correspond to a brake operation of a vehicle; sensing a pressure that corresponds to the brake operation and generating a pressure value that corresponds to the sensed pressure; and determining an operation of a brake based on the switch on signal, the switch off signal, and the pressure value, that are received, wherein the determination of the operation of the brake may include determining the brake to be operated when the switch on signal is received, or the pressure value is greater than a predetermined threshold pressure.

Further, the determination of the operation of the brake may include determining the brake not to be operated when the switch off signal is received and the pressure value is less than the threshold pressure. The method may further include generating a stroke value that corresponds to the brake operation, and the determination of the operation of the brake may include determining the brake to be operated when the switch on signal is received, or the pressure value is greater than a predetermined threshold pressure, or the stroke value exceeds 0.

In addition, the vehicle braking determining method according to an exemplary embodiment may further include storing a diagnostic trouble code that corresponds to a malfunction of the braking light switch. The vehicle braking determining method according to an exemplary embodiment may further include transmitting the switch on signal, the switch off signal, the pressure value. The vehicle braking determining apparatus and the vehicle braking determining method according to the present invention have the effect more accurately determining the braking of the vehicle.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a view showing a configuration of an apparatus for determining a vehicle braking according to an exemplary embodiment of the present invention; and
FIG. 2 is a flowchart showing a method for determining a vehicle braking according to an exemplary embodiment of the present invention.

### DETAILED DESCRIPTION

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, combustion, plug-in hybrid electric vehicles, hydrogen-powered vehicles and other alternative fuel vehicles (e.g. fuels derived from resources other than petroleum).

Although exemplary embodiment is described as using a plurality of units to perform the exemplary process, it is understood that the exemplary processes may also be performed by one or plurality of modules. Additionally, it is understood that the term controller/control unit refers to a hardware device that includes a memory and a processor. The memory is configured to store the modules and the processor is specifically configured to execute said modules to perform one or more processes which are described further below.

Furthermore, control logic of the present invention may be embodied as non-transitory computer readable media on a computer readable medium containing executable program instructions executed by a processor, controller/control unit or the like. Examples of the computer readable mediums include, but are not limited to, ROM, RAM, compact disc (CD)-ROMs, magnetic tapes, floppy disks, flash drives, smart cards and optical data storage devices. The computer readable recording medium can also be distributed in network coupled computer systems so that the computer readable media is stored and executed in a distributed fashion, e.g., by a telematics server or a Controller Area Network (CAN).

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

Hereinafter, exemplary embodiments disclosed in the present specification will be described in detail with reference to the accompanying drawings. In the present specification, the same or similar components will be denoted by the same or similar reference numerals, and an overlapped description thereof will be omitted. Therefore, these terms do not have meanings or roles that distinguish them from each other by themselves. In describing exemplary embodiments of the present specification, when it is determined that a detailed description of the well-known art associated with the present invention may obscure the gist of the present invention, it will be omitted. The accompanying drawings are provided only in order to allow exemplary embodiments disclosed in the present specification to be easily understood and are not to be interpreted as limiting the spirit disclosed in the present specification, and it is to be understood that the present invention includes all modifications, equivalents, and substitutions without departing from the scope and spirit of the present invention.

It is to be understood that when one component is referred to as being "connected" or "coupled" to another component, it may be connected or coupled directly to another component or be connected or coupled to another component with the other component intervening therebetween. On the other hand, it is to be understood that when one component is referred to as being "connected or coupled directly" to another component, it may be connected to or coupled to another component without the other component intervening therebetween. Singular forms are to include plural forms unless the context clearly indicates otherwise.

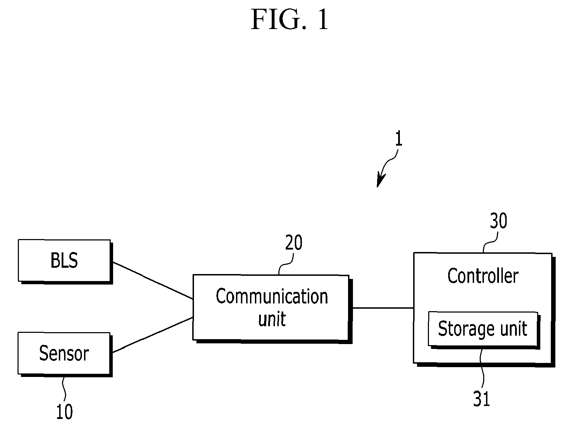

FIG. 1 is a view showing a configuration of an apparatus for determining a vehicle braking according to an exemplary embodiment of the present invention. The apparatus for determining the vehicle braking will now be described with reference to FIG. 1.

The vehicle braking determining apparatus 1 may include a brake light switch (BLS) mounted on a brake pedal, a sensor 10 configured to sense a braking fluid pressure generated by receiving a control force of the brake pedal, a communication unit 20, and a controller 30 configured to determine the braking using a switch signal of the brake light switch BLS and the braking fluid pressure. The braking light switch BLS may be configured to generate a signal of the braking light switch BLS including an on signal of the braking light switch BLS that corresponds to when the driver operates or engages the brake pedal and an off signal of the braking light switch that corresponds to a case that the brake pedal is not operated (e.g., no pressure is exerted onto the brake pedal).

The sensor 10 may be configured to sense a pressure of a master cylinder of an electronic stability control (ESC) generated when the driver engages the brake pedal to generate a pressure value P. The pressure value P may be sensed by considering a spraying (e.g., about ±9bar) of the sensor 10. When the vehicle is an environmentally-friendly vehicle that does not use an engine negative pressure, the sensor 10 may be configured to measure a moved displacement of the brake pedal, thereby generating a stroke value S that corresponds to the measured displacement.

The communication unit 20 may be configured to connect the braking light switch BLS, the sensor 10, and the controller 30 via a controller area network (CAN) communication and may be configured to transmit the signal of the braking light switch BLS, the pressure value P, and the stroke value S to the controller 30. The controller 30 may then be configured to determine the braking of the vehicle based on the signal of the braking light switch BLS and the pressure value P. The controller 30 may also be configured to determine the braking using the on (ON) signal of the braking light switch BLS and the pressure value P as an "OR" condition. In other words, the controller 30 may be configured to determine the braking when the ON signal of the braking light switch BLS is transmitted, or when the pressure value P is greater than a threshold pressure TH (e.g., about 15bar).

For example, the braking light switch BLS may malfunction and the driver may engage the brake pedal, however the controller 30 may be configured to determine the braking when the pressure value P is greater than the threshold pressure TH even when the OFF signal of the braking light switch BLS is generated. Additionally, even when the pressure value P is less than the threshold pressure TH, when the driver engages the brake pedal and the ON signal of the braking light switch BLS is generated, the controller 30 may be configured to determine (e.g., detect) the braking. Accordingly, the controller 30 may be configured to more accurately determine the vehicle braking existence (e.g., a braking intention of the driver). When the OFF signal of the braking light switch BLS is received and the pressure value P is less than the threshold pressure TH, the controller 30 may be configured to determine that no pressure has been exerted onto the brake pedal.

Moreover, the controller 30 may include a storage unit 31 (e.g., a memory), and the storage unit 31 may be configured to store a diagnostic trouble code (DTC). The diagnostic trouble code may include a diagnosis code that corresponds to the braking light switch BLS malfunctioning. Accordingly, when the vehicle is stoked in a garage by problems other than the malfunction of the braking light switch BLS, a fault existence of the braking light switch BLS may be confirmed without maintenance of the braking light switch BLS along the diagnostic trouble code. For an environmentally-friendly vehicle that does not use the engine pressure to the vehicle braking, the controller 30 may be configured to determine the braking of the vehicle based on the signal of the braking light switch BLS, the pressure value P, and the stroke value S.

The controller 30 may further be configured to determine the braking using the ON signal of the braking light switch BLS, the pressure value P, and the stroke value S as the "OR" condition. In other words, the controller 30 may be configured to determine the braking when the ON signal of the braking light switch BLS is transmitted, or the pressure value P is greater than the threshold pressure TH, or the stroke value S is greater than 0.

Accordingly, when the fault of the braking light switch BLS occurs and a booster pressure leak, for the staring of the vehicle, the driver must engage the brake pedal with a about 25-40kgf level, thereby the pressure value P exceeds the threshold pressure TH and the on signal of the braking light switch BLS is generated. Accordingly, when the brake pedal is not engaged by the 25-40kgf level (e.g., insufficient pressure is exerted onto the brake pedal), the controller 30 may be configured to determine the braking when the stroke value S is greater than 0 even when the pressure value P is less than the threshold pressure TH and the on signal of the braking light switch BLS is not generated. The controller 30 may be configured to execute various functions such as the functions of an engine controller, a mission controller, a button key starting controller. In other words, the controller 30 may be an upper controller configured to operate various controllers that execute the functions corresponding to the braking. For example, the button key starting controller may be operated to be started in the case of the braking.

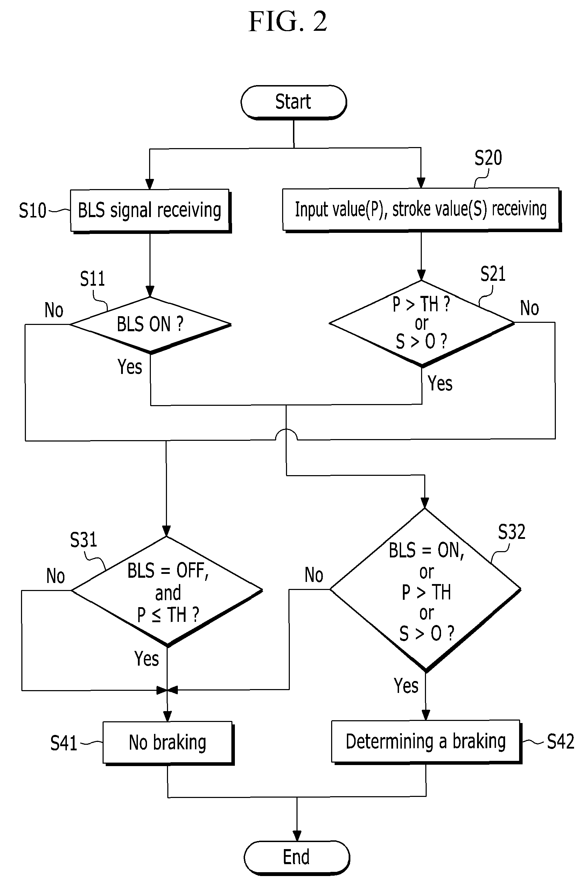

FIG. 2 is a flowchart showing a method for deciding a vehicle braking according to an exemplary embodiment of the present invention. The method for determining the vehicle braking will be described with reference to FIG. 2.

In a step S10, the controller 30 may be configured to receive the signal of the braking light switch BLS. In a step S20, the controller 30 may be configured to receive the pressure value P. For an environmentally-friendly vehicle, the stroke value S may be received. In a step S11, the controller 30 may be configured to determine whether the on signal of the braking light switch BLS is generated. In step S21, the controller 30 may be configured to determine whether the pressure value P is greater than the threshold pressure TH. In an environmentally-friendly vehicle, it may be determined whether the stroke value S excesses 0.

In a step S31, the controller 30 may be configured to determine whether the OFF signal of the braking light switch BLS is generated and the pressure value P is less than the threshold pressure TH. In the step S32, the controller 30 may be configured to determine whether the ON signal of the braking light switch BLS is generated, or the pressure value P is greater than the threshold pressure TH. In an environmentally-friendly vehicle, it may be determined whether the stroke value S excesses 0.

In the step S41, the controller 30 may be configured to determine no braking when the OFF of the braking light switch BLS is generated and the pressure value P is less than the threshold pressure TH. In the step S42, the controller 30 may be configured to determine the braking when the ON signal of the braking light switch BLS is generated, or the pressure value P is greater than the threshold pressure TH. In an environmentally-friendly vehicle, the controller 30 may be configured to determine the braking when the ON signal of the braking light switch BLS is received, or the pressure value P is greater than the threshold pressure TH, or the stroke value S is greater than 0.

While this invention has been described in connection with what is presently considered to be exemplary embodiments, it is to be understood that the invention is not limited to the disclosed exemplary embodiments, but, on the contrary, is intended to cover various modifications and equivalent arrangements included within the spirit and scope of the appended claims. Therefore, the above-detailed description is not to be interpreted as being restrictive, but is to be considered as being illustrative. The scope of the present invention is to be determined by reasonable interpretation of the claims, and all alterations within equivalences of the present invention fall within the scope of the present invention.

### Description of symbols

1: vehicle braking deciding apparatus
10: sensor
20: communication unit
30: controller
BLS: braking light switch

## Claims

1. An apparatus for determining a vehicle braking, comprising:
a braking light switch configured to generate a switch on signal or a switch off signal that corresponds to a brake operation of a vehicle;
a sensor configured to sense a pressure that corresponds to the brake operation and generate a pressure value that corresponds to the sensed pressure; and
a controller configured to determine the brake operation based on the switch on signal, the switch off signal, and the pressure value, that are transmitted,
wherein the controller is configured to determine the brake to be operated when the switch on signal is received, or the pressure value is greater than a predetermined threshold pressure.

2. The apparatus of claim 1, wherein the controller is configured to determine the brake not to be operated when the switch off signal is received and the pressure value is less than the threshold pressure.

3. The apparatus of claim 1 or 2, wherein the sensor is configured to generate a stroke value that corresponds to the brake operation, and the controller is configured to determine the brake to be operated when the switch on signal is received, or the pressure value is greater than a predetermined threshold pressure, or the stroke value is greater than 0.

4. The apparatus of any one of claims 1 to 3, wherein the controller includes a storage unit configured to store a diagnostic trouble code that corresponds to the braking light switch malfunction.

5. The apparatus of any one of claims 1 to 4, further comprising:
a communication unit,
wherein the braking light switch, the sensor, and the controller are connected with each other via the communication unit, and
wherein the switch on signal, the switch off signal, and the pressure value are transmitted to the controller via the communication unit.

6. A method for deciding a vehicle braking, comprising:
generating, by a braking light switch, a switch on signal, or a switch off signal, that corresponds to a brake operation of a vehicle;
sensing, by a sensor, a pressure that corresponds to the brake operation and generating a pressure value that corresponds to the sensed pressure; and
determining, by a controller, the brake operation based on the switch on signal, the switch off signal, and the pressure value, that are received,
wherein the determining of the brake operation includes determining the brake to be operated when the switch on signal is received, or the pressure value is greater than a predetermined threshold pressure.

7. The method of claim 6, wherein the determination of the operation of the brake includes determining the brake not to be operated when the switch off signal is received and the pressure value is less than the threshold pressure.

8. The method of claim 6 or 7, further comprising:
generating, by the sensor, a stroke value that corresponds to the brake operation,
wherein the determining of the operation of the brake includes determining the brake to be operated when the switch on signal is received, or the pressure value is greater than a predetermined threshold pressure, or the stroke value is greater than 0.

9. The method of any one of claims 6 to 8, further comprising:
storing, by a storage unit, a diagnostic trouble code that corresponds to a malfunction of the braking light switch.

10. The method of any one of claims 6 to 9, further comprising:
transmitting, by a communication unit, the switch on signal, the switch off signal, the pressure value to the controller.

11. A non-transitory computer readable medium containing program instructions executed by a controller to determine braking of a vehicle, the computer readable medium comprising:
program instructions that control a braking light switch to generate a switch on signal, or a switch off signal, that corresponds to a brake operation of a vehicle;
program instructions that control a sensor to sense a pressure that corresponds to the brake operation and generate a pressure value that corresponds to the sensed pressure; and
program instructions that determine the brake operation based on the switch on signal, the switch off signal, and the pressure value, that are received,
wherein the brake is determined to be operated when the switch on signal is received, or the pressure value is greater than a predetermined threshold pressure.

12. The non-transitory computer readable medium of claim 11, further comprising:
program instructions that determine the brake not to be operated when the switch off signal is received and the pressure value is less than the threshold pressure.

13. The non-transitory computer readable medium of claim 11 or 12, further comprising:
program instructions that control the sensor to generate a stroke value that corresponds to the brake operation; and
program instructions that determine the brake to be operated when the switch on signal is received, or the pressure value is greater than a predetermined threshold pressure, or the stroke value is greater than 0.
